# EUROPÄISCHE PATENTSCHRIFT

(11) **EP 3 776 101 B1**
(45) Veröffentlichungstag und Bekanntmachung des Hinweises auf die Patenterteilung: **21.05.2025**
(21) Anmeldenummer: 19713374.7
(22) Anmeldetag: 13.03.2019
(51) Int. Cl.: G05B 13/02, A47J 31/52

(54) **GETRÄNKEBEREITER UND VERFAHREN ZUM BETRIEB EINES GETRÄNKEBEREITERS**
DRINK PREPARATION MEANS AND METHOD FOR OPERATING A DRINK PREPARATION MEANS
SYSTÈME DE PRÉPARATION DE BOISSONS ET PROCÉDÉ POUR FAIRE FONCTIONNER UN SYSTÈME DE PRÉPARATION DE BOISSONS

(30) Priorität: 05.04.2018 DE 102018205153
(43) Veröffentlichungstag der Anmeldung: 17.02.2021
(73) Patentinhaber: WMF GmbH, 73312 Geislingen/Steige (DE)
(72) Erfinder: SCHIRRMACHER, Philipp, 89073 Ulm (DE)
(74) Vertreter: Pfenning, Meinig & Partner mbB
(86) Internationale Anmeldenummer: PCT/EP2019/056216
(87) Internationale Veröffentlichungsnummer: WO 2019/192812

(56) Entgegenhaltungen:
- EP-A1- 1 647 951
- EP-A1- 2 279 683
- EP-A2- 0 527 567
- WO-A1-2004/024615
- US-A1- 2011 283 888

## Beschreibung

Es werden ein Getränkebereiter und ein Verfahren zum Betrieb eines Getränkebereiters bereitgestellt. Der Getränkebereiter enthält einen Sensor einer 1. Kategorie, der zu einem bestimmten Zeitpunkt nur einen einzelnen Messwert S1 liefert, einen Sensor einer 2. Kategorie, der zu einem bestimmten Zeitpunkt mehrere Messwerte S2 liefert, einen Datenspeicher und eine Steuereinheit. Die Steuereinheit ist dazu konfiguriert, die Messwerte S2 mit Zielwerten zu vergleichen, die im Datenspeicher gespeichert sind und basierend auf diesem Vergleich mindestens ein Ereignis auszulösen oder nicht auszulösen. Falls der Vergleich nicht zur Auslösung eines Ereignisses führt, erfolgt durch die Steuereinheit eine Erfassung von mindestens einen Messwert S1, wobei der Messwert S1 dazu verwendet wird, die Messwerte S2 mindestens einem Ereignis zuzuordnen und diese Messwerte S2 als Zielwerte für das zugeordnete Ereignis auf dem Datenspeicher zu speichern.

Maschinen, wie z.B. Getränkebereiter, sind hauptsächlich darauf ausgelegt, Befehle von Benutzern entgegenzunehmen und zu einem Ergebnis umzusetzen. Die Befehle (z.B. in Form von ganzen Befehlsketten) werden daher von der Maschine bearbeitet und mit einem (vom Benutzer erwartbaren) Ergebnis beendet. Komplexe Aufgaben lassen sich auf diese Art von der Maschine nicht mehr einfach lösen, da es sehr aufwändig ist, die komplexen Aufgaben mit ihren Randbedingungen zu Befehlsketten zu erfassen, zu definieren und zu programmieren. Dieser Vorgang benötigt viel Zeit, hat ein gewisses Fehlerrisiko und ist mit hohen Kosten verbunden.

Unter dem Begriff "künstliche Intelligenz" in Bezug auf einen Computer wird im allgemeinen Sprachgebrauch verstanden, dass der Computer so gebaut bzw. so programmiert ist, dass er eigenständig Probleme lösen kann. Bei der Bildung eines künstlichen, neuronalen Netzes geht es darum, auf Softwareebene ein Netz aus Knoten und Verbindungen zu bilden. Das Netz entwickelt sich in der Software, indem Verbindungen oder Knoten gelöscht, hinzugefügt oder anders gewichtet werden.

Maschinelles Lernen beruht auf Algorithmen und Codes. Beim maschinellen Lernen werden von der Maschine Daten akquiriert, aus den Daten gelernt und entsprechende Entscheidungen getroffen. Der Algorithmus des maschinellen Lernens kann als Flussdiagramm bzw. Entscheidungsbaum dargestellt werden. Die einzelnen Zweige des Flussdiagramms bzw. Entscheidungsbaums werden durch die von der Maschine gesammelten Daten gewichtet.

Ein überwachtes Lernen einer Maschine richtet sich nach einer im Voraus festgelegten, zu lernenden Ausgabe, deren Ergebnisse bekannt sind (Stand vom 22.03.2018: https://de.wikipedia.org/wiki/%C3%9Cberwachtes_Lernen). Die Ergebnisse des Lernprozesses können mit den bekannten, richtigen Ergebnissen verglichen, also "überwacht", werden. In der Regel sieht ein Lernschritt folgendermaßen aus:
1. Anlegen der Eingabe;
2. Verarbeitung der Eingabe (Propagierung);
3. Vergleich der Ausgabe mit dem erwünschten Wert (Fehler);
4. Verkleinern des Fehlers durch Modifikation der Gewichtung (z. B. mit Backpropagation).

Bei einem unüberwachten Lernen einer Maschine sind im Voraus keine Zielwerte bekannt. Die Maschine versucht Muster zu erkennen und diese zu interpretieren.

Bei der Rückpropagation (engl.: "backpropagation" = Fehlerrückführung) läuft der Algorithmus in folgenden Phasen (Stand vom 22.03.2018: https://de.wi-kipedia.org/wiki/Backpropagation):
1. Ein Eingabemuster wird angelegt und vorwärts durch das Netz propagiert;
2. Die Ausgabe des Netzes wird mit der gewünschten Ausgabe verglichen und die Differenz der beiden Werte wird als Fehler des Netzes erachtet; und
3. Der Fehler wird nun wieder über die Ausgabe- zur Eingabeschicht zurück propagiert, wobei die Gewichtungen der Verbindungen im Netz abhängig von ihrem Einfluss auf den Fehler geändert. Dies garantiert bei einem erneuten Anlegen der Eingabe eine Annäherung an die gewünschte Ausgabe.

Als tiefes Lernen (engl.: "deep learning") wird ein Zweig des maschinellen Lernens bezeichnet. Hierbei werden riesige Datenmengen analysiert und daraus Muster erkannt und abgeleitet.

Künstliche Intelligenz ist vor allem dann vorteilhaft, wenn eine Maschine aus einem komplexen Detektionsmuster eines Sensors (z.B. eine Ansammlung von mehreren Messpunkten anstelle von einem einzelnen Messwert) einen bestimmten Vorgang durchführen soll.

Sensoren lassen sich grundsätzlich in zwei verschiedene Kategorien einteilen, nämlich Sensoren der 1. Kategorie und Sensoren der 2. Kategorie.

Sensoren der 1. Kategorie liefern zu einem bestimmten Zeitpunkt lediglich einen einzelnen Messwert, wie z.B. eine bestimmte Temperatur (Temperatursensor), einen bestimmten Druck (Drucksensor), eine bestimmte Geschwindigkeit (Geschwindigkeitssensor), eine bestimmte Flussgeschwindigkeit (Flussgeschwindigkeitssensor) oder eine bestimmte elektrische Kapazität. Misst diese Kategorie von Sensoren permanent, so werden in Abhängigkeit von der Zeit einzelne Messwerte erhalten. Das Ergebnis der Messung kann in einem x-y-Diagramm dargestellt werden, wobei x die Zeit und y den einzelnen Messwert darstellt. Als Beispiel sei hier ein Touchscreen eines Getränkebereiters genannt, der bei Überschreiten eines bestimmten Drucks (Druck-sensitiver Touchscreen) oder bei Detektion einer bestimmten Kapazität (kapazitiver Touchscreen) auf einem bestimmten Feld des Touchscreens ein bestimmtes Ereignis, wie z.B. die Ausgabe eines bestimmten Getränks, bewirkt.

Sensoren der 2. Kategorie liefern zu einem bestimmten Zeitpunkt nicht nur einen einzelnen, sondern mindestens zwei verschiedene Messwerte, wie z.B. die Frequenz und die Amplitude einer longitudinalen Schwingung (z.B. Akustik-Sensor oder Vibrationssensor), die Frequenz und die Amplitude einer transversalen Schwingung (z.B. Lichtsensor, IR-Sensor oder Radarsensor), eine Richtung und eine Stärke eines Magnetfelds (Magnetfeldsensor) oder die elektrische Leitfähigkeit, den pH-Wert und die Zuckerkonzentration einer bestimmten Flüssigkeit (Geschmackssensor). Misst diese Kategorie von Sensoren permanent, so werden in Abhängigkeit von der Zeit mindestens zwei verschiedene Messwerte erhalten. Das Ergebnis der Messung kann bei zwei verschiedenen Messwerten in einem x-y-z-Diagramm dargestellt werden, wobei x die Zeit, y den ersten Messwert und z den zweiten Messwert darstellt.

Elektrische Geräte (z.B. Getränkebereiter wie Kaffeemaschinen) arbeiten bevorzugt mit Sensoren der 1. Kategorie, da bei diesen Sensoren die zu ermittelnden Messgrößen ohne großen Rechenaufwand verfügbar sind. Beispielsweise gibt ein widerstandsbasierter Temperatursensor zu einem bestimmten Zeitpunkt einen bestimmten Widerstand aus und von diesem bestimmten Widerstand wird auf eine bestimmte Temperatur geschlossen.

Die elektrischen Geräte enthalten eine Software, die vorgeben kann, wie das Gerät bei der Messung eines bestimmten Messwerts zu einem bestimmten Zeitpunkt reagieren soll. Beispielsweise kann bei Überschreiten eines bestimmten Schwellenwerts eine Aktion des Geräts ausgelöst werden. Allgemein ausgedrückt speichert die Software eine Tabelle, in der Messwerte einem bestimmten Gerätezustand bzw. einer bestimmten Aktion des Geräts (d.h. einem bestimmten Steuerbefehl des Geräts) zugeordnet werden. Auf diese Art und Weise kann das Gerät allein über einen einzelnen Messwert eines Sensors gesteuert werden, z.B. eine bestimmte Aktion ausgeführt werden.

Elektrische Geräte lassen sich grundsätzlich auch mit Sensoren der 2. Kategorie steuern. Auch in diesem Fall lassen sich Tabellen oder Muster anlegen, in welchen eine Zuordnung von bestimmten vom Sensor erfassten Messwerten (Muster) zu einer oder mehrerer Aktionen der Maschine kodiert ist. Allerdings ist für die Erstellung der Zuordnung(en) der Aufwand deutlich höher als bei den (einfacheren) Sensoren der 1. Kategorie. Grund für den höheren Aufwand ist, dass für den Befehl an das Gerät, eine bestimmte Aktion auszuführen, mindestens zwei Messwerte jeweils einen bestimmten, vorgegebenen Wert einnehmen müssen ("und"-Verknüfung von y-Wert und z-Wert zum Zeitpunkt x) und damit die Komplexität der Regelung steigt.

Es wird davon ausgegangen, dass die zunehmenden Anforderungen an elektrische Geräte (im Besonderen: Getränkebereiter wie Kaffeemaschinen), d.h. komplexe Steuervorgänge in elektrischen Geräten, zukünftig nur noch mit Sensoren der 2. Kategorie erfüllt werden können.

Die EP 1 647 951 A1 offenbart einen Getränkebereiter, der eine Steuereinrichtung aufweist, die in ihrem Langzeitdatenspeicher einen charakteristischen Kennwert eines Behälters aufweist, wobei durch die Steuereinrichtung eine Fördermenge an Flüssigkeit in den Behälter gesteuert werden kann.

Die EP 2 279 683 A1 offenbart ein Verfahren zur Anpassung eines technischen Parameters durch ein benutzergesteuertes neuronales Netzwerk, das den Parameter zur Beeinflussung der Extraktion von Konsumsubstanzen während der Herstellung von Lebensmitteln steuert, und einen Verkaufsautomaten zur Implementierung des Verfahrens.

Die WO 2004/024615 A1 offenbart eine Ausgabevorrichtung für Getränke mit einer Identifikationseinrichtung, wobei die Identifikationseinrichtung zum Identifizieren unterschiedlicher Arten von Behältern und zum Aussenden eines den Behälter beschreibenden Identifikationssignals geeignet ist, wobei die Ausgabevorrichtung ferner mit einer Ventileinrichtung versehen ist, die auf Basis des Identifikationssignals mindestens eine Zufuhreinrichtung der Ausgabevorrichtung steuern kann, um den Behälter mit einer vorgegebenen Menge an Lebensmittels zu füllen.

Die US 2011/283888 A1 offenbart einen Getränkebereiter, der ein Wasserreservoir, einen Boiler, eine Brüheinheit, eine Benutzeroberfläche, eine Steuereinheit und einen Kaffeebehälter, wobei der Kaffeebehälter einen kapazitiven Sensor zur Erfassung einer Restkaffeemenge im Kaffeebehälter aufweist und wobei die Steuereinheit programmiert ist, einen Benutzer über die Benutzeroberfläche mindestens eine Information über die Kaffeemenge in dem Kaffeebehälter zu liefern.

Die EP 0 527 567 A2 offenbart ein Verfahren zur Steuerung eines Objekts, wobei Signale von einem einzigen Sensor, der eine einzelne Eigenschaft des gesteuerten Objekts misst, abgeleitet werden und von einer Mengenabtasteinheit verwendet werden, um eine Vielzahl von Steuercharakteristika für das Objekt abzuleiten, wobei die Vielzahl von Steuercharakteristika von einem neuronalen Netzwerk verarbeitet werden, um ein Basis-Steuersignal abzuleiten, und von einem weiteren Sensor und einem lokalen Zustandsdetektor abgeleitete Eigenschaften von einem Fuzzy-Logic-System analysiert werden und zur Modifikation des Basis-Steuersignals verwendet werden.

Es ist daher die Aufgabe der vorliegenden Erfindung, einen Getränkebereiter bereitzustellen, der auf einfache Art und Weise und mit einem minimalen Aufwand für einen Benutzer komplexe Steuervorgänge erlernen und durchführen kann.

Die Erfindung wird gelöst durch einen Getränkebereiter mit den Merkmalen von Anspruch 1 und ein Verfahren mit den Merkmalen von Anspruch 8 gelöst. Die abhängigen Ansprüche zeigen vorteilhafte Weiterbildungen auf.

Erfindungsgemäß wird ein Getränkebereiter bereitgestellt, enthaltend
a) mindestens einen Sensor einer 1. Kategorie, wobei unter einem Sensor der 1. Kategorie ein Sensor verstanden wird, der zu einem bestimmten Zeitpunkt nur einen einzelnen Messwert S1 liefert;
b) mindestens einen Sensor einer 2. Kategorie, wobei unter einem Sensor der 2. Kategorie ein Sensor verstanden wird, der zu einem bestimmten Zeitpunkt mehrere Messwerte S2 liefert;
c) einen Datenspeicher; und
d) eine Steuereinheit, wobei die Steuereinheit dazu konfiguriert ist, die Messwerte S2 mit Zielwerten für die Messwerte S2, die im Datenspeicher gespeichert sind und für mindestens ein bestimmtes Ereignis kodieren, zu vergleichen und basierend auf diesem Vergleich bei dem Getränkebereiter mindestens ein Ereignis automatisch auszulösen oder nicht auszulösen;

wobei die Steuereinheit des Getränkebereiters ferner dazu konfiguriert ist, mindestens einen Messwert S1 zu erfassen und zu verwenden, um bestimmte Messwerte S2, die nach einem Vergleich mit Zielwerten für die Messwerte S2 kein Ereignis auslösen, mindestens einem Ereignis zuzuordnen, und diese Messwerte S2 als Zielwerte für das mindestens eine Ereignis auf dem Datenspeicher zu speichern,
dadurch gekennzeichnet, dass der Getränkebereiter weiterhin dazu konfiguriert ist, Messwerte S2 des mindestens einen Sensors der 2. Kategorie, basierend auf einer Bestätigung über den mindestens einen Sensor der 1. Kategorie durch einen Benutzer, bestimmten, regelmäßig auftretenden, Ereignissen zuzuordnen, wobei das Zuordnen nach dem Prinzip des maschinellen Lernens erfolgt, und wobei die Speicherung der Messwerte S2 zu den Ereignissen automatisch auf dem Datenspeicher erfolgt.

Der erfindungsgemäße Getränkebereiter ist somit dazu geeignet, einen oder mehrere im Getränkebereiter enthaltene(n) Sensor(en) der 2. Kategorie mithilfe von einem oder mehreren im Getränkebereiter enthaltene(n) Sensor(en) der 1. Kategorie auf bestimmte, regelmäßig auftretende Ereignisse, einzulernen. Ein Ereignis ist hierbei beispielsweise eine durch einen vom Benutzer über den mindestens einen Sensor der 1. Kategorie bestätigte Ausgabe von Espresso durch den Getränkebereiter, wenn der mindestens eine Sensor der 2. Kategorie eine Espressotasse an einer bestimmten Stelle des Getränkebereiters (z.B. unter einer Brühgruppe) detektiert. Die Bestätigung des Benutzers kann hierbei mithilfe eines schnell und einfach durchführbaren Knopfdrucks erfolgen. Die Speicherung der Messwerte S2 zu diesem Ereignis erfolgt automatisch auf dem Datenspeicher.

Vorteil an dem "Einlernen" des Getränkebereiters über mindestens einen Sensor der 1. Kategorie ist, dass der Aufwand des Einlernens für den Benutzer des Getränkebereiters nur sehr gering ist (z.B. Durchführung eines einfachen Knopfdrucks).

Wird nach dem Einlernen erneut eine Espressotasse in den Detektionsbereich des mindestens einen Sensors der 2. Kategorie gestellt, bewirkt der von der Steuereinheit des Getränkebereiters durchgeführte Vergleich des vom Sensor der 2. Kategorie erfassten Musters mit dem im Datenspeicher abgespeicherten Muster, dass das eingelernte Ereignis vom Getränkebereiter automatisch (d.h. ohne weitere Eingabe eines Benutzers) ausgelöst wird. Bei dem eingelernten, automatisch ausgelösten Ereignis kann es sich beispielsweise um die Anzeige einer "Ja/Nein"-Abfrage zu einem bestimmten Getränk (z.B. Espresso), um die Anzeige eines Timers bis zur Ausgabe eines bestimmten Getränks (z.B. Espresso), um die Anzeige oder Hervorhebung einer bestimmten Auswahl von Getränken (z.B. Espresso, Ristretto, Espresso Macchiato) und/oder um die unmittelbare Ausgabe eines Espresso handeln. Handelt es sich bei dem eingelernten Ereignis um die unmittelbare Ausgabe eines Espresso durch den Getränkebereiter, so wird also vom Getränkebereiter automatisch ein Espresso ausgegeben. Anders ausgedrückt ist eine erneute Bestätigung, bzw. Anwahl, der Ausgabe von Espresso durch einen Benutzer nicht mehr nötig. Handelt es sich bei dem eingelernten Ereignis um die Anzeige oder Hervorhebung einer bestimmten Auswahl von Getränken, so wird vom Getränkebereiter automatisch die bestimmte Auswahl von Getränken angezeigt oder hervorgehoben. Vom Benutzer kann dann in dieser Auswahl ein bestimmtes Getränk angewählt werden. Die Anwahl kann über einen Sensor der 1. Kategorie, beispielsweise über Druck einer Taste des Getränkebereiters oder Berühren eines Felds auf einem Touchscreen des Getränkebereiters, oder durch einen Sensor der 2. Kategorie, beispielsweise über Ausführen einer Gestik und/oder Mimik (z.B. Augensteuerung) vor einer Kamera des Getränkebereiters, erfolgen.

Der erfindungsgemäße Getränkebereiter ordnet daher Messwerte von Sensoren der 2. Kategorie basierend auf einer Bestätigung über einen Sensor der 1.

Kategorie durch einen Benutzer bestimmten Ereignissen zu, speichert diese Zuordnung auf seinem Datenspeicher und reagiert in Zukunft entsprechend, falls ein bereits erfolgtes (bekanntes) Ereignis erneut auftritt. Dieses Zuordnen erfolgt nach dem Prinzip des maschinellen Lernens.

Mit zunehmender Häufigkeit von Ereignissen während des Betriebs des Getränkebereiters steigt der Erfahrungsschatz des Getränkebereiters. Daher nimmt durch die Konfrontation des Getränkebereiters mit vielen Ereignissen die Wahrscheinlichkeit zu, dass ein bestimmtes Detektionsmuster am Sensor der 2. Kategorie bereits bekannt ist und somit auch ohne Aktivierung eines Sensors der 1. Kategorie ein Ereignis auslöst. Anders ausgedrückt verstärkt sich die Verknüpfung zwischen den vom Sensor 2. Kategorie detektierten Mustern und den zugehörigen Ereignissen. Entsprechend nimmt die Bedeutung der Sensoren der 1. Kategorie zunehmend ab und spielt im idealisierten Fall eines "ausgelernten" Getränkebereiters gar keine Rolle mehr. Das ausgelöste Ereignis kann auch sein, dass z.B. eine Bedienoberfläche des Getränkebereiters in einer bestimmten Form, d.h. anders als vor dem Auslösen des Ereignisses dargestellt wird. Hierbei kann auf der Bedienoberfläche eine bestimmte Getränkeauswahl angezeigt oder hervorgehoben werden. Die Anwahl eines bestimmten Getränks in dieser Getränkeauswahl kann dann beispielsweise über einen Tastendruck (Sensor der 1. Kategorie) oder über eine bestimmte Gestik (Sensor der 2. Kategorie) erfolgen.

In einer bevorzugten Ausgestaltungsform enthält der erfindungsgemäße Getränkebereiter eine Bedienerschnittstelle, bevorzugt in Form eines Touchscreens. Die Bedienerschnittstelle kann dazu konfiguriert sein, ein ausgelöstes Ereignis anzuzeigen. Ferner kann die Bedienerschnittstelle dazu konfiguriert sein, einen Countdown bis zur Umsetzung eines ausgelösten Ereignisses anzuzeigen. Zudem kann die Bedienerschnittstelle dazu konfiguriert sein, eine (bestimmte) Getränkeauswahl anzuzeigen. Darüberhinaus kann die Bedienerschnittestelle dazu konfiguriert sein, Informationen über Messwerte S2 des mindestens einen Sensor einer 2. Kategorie anzuzeigen, bevorzugt Informationen ausgewählt aus der Gruppe bestehend aus Höhe eines Getränkebehälters, Füllstand eines Getränkebehälters, Füllstand eines Bohnenbehälters des Getränkebereiters, Leermahlen einer Mühle des Getränkebereiters und Kombinationen hiervon. Weiterhin kann die kann die Bedienerschnittestelle dazu konfiguriert sein, Zielwerte für S2 anzuzeigen und auf Wunsch eines Benutzers zu bestätigen und/oder zu löschen.

Die Steuereinheit des Getränkebereiters kann dazu konfiguriert sein, das in den Zielwerten für die Messwerte S2 des Sensors der 2. Kategorie kodierte mindestens eine Ereignis auszulösen, wenn sich die Messwerte S2 mit einer Wahrscheinlichkeit von jeweils >50%, bevorzugt ≥60%, besonders bevorzugt ≥70%, ganz besonders bevorzugt ≥80%, insbesondere ≥90%, Zielwerten für die Messwerte S2 zuordnen lassen.

In einer bevorzugten Ausgestaltungsform ist die Steuereinheit des Getränkebereiters dazu konfiguriert, mindestens einen Messwert S1 zu verwenden, wenn sich die Messwerte S2 mit einer Wahrscheinlichkeit von jeweils nur ≤50%, bevorzugt ≤40%, besonders bevorzugt ≤30%, ganz besonders bevorzugt ≤20%, insbesondere ≤10%, Zielwerten für die Messwerte S2 zuordnen lassen.

Der mindestens eine Sensor der 1. Kategorie kann dazu konfiguriert sein, zu einem bestimmten Zeitpunkt einen nur eindimensionalen Messwert S1 zu liefern. Der eindimensionale Messwert kann ausgewählt sein aus der Gruppe bestehend aus Temperatur, Druck, Geschwindigkeit, Flussgeschwindigkeit, elektrische Kapazität, Bewegungsrichtung, Strecke, Zeit und Masse.

Der mindestens eine Sensor der 1. Kategorie kann ausgewählt sein aus der Gruppe bestehend aus Temperatursensor, Drucksensor, Geschwindigkeitssensor, Flussgeschwindigkeitssensor, Sensor für elektrischen Strom und kapazitiver Sensor. Bevorzugt ist der mindestens eine Sensor der 1. Kategorie ein Drucksensor und/oder kapazitiver Sensor. Ganz besonders bevorzugt ist der Sensor der 1. Kategorie ein Touchscreen des Getränkebereiters.

Der mindestens eine Sensor der 2. Kategorie kann dazu konfiguriert sein, zu einem bestimmten Zeitpunkt mehrdimensionale Messwerte S2 zu liefern, bevorzugt mindestens dreidimensionale Messwerte S2, besonders bevorzugt mindestens vierdimensionale Messwerte S2. Eine Dimension des mehrdimensionalen Messwerts S2 kann ausgewählt sein aus der Gruppe bestehend aus Frequenz einer Schwingung (z.B. Wellenlänge von Licht, d.h. Lichtfarbe), Amplitude einer Schwingung (z.B. Amplitude von Licht, d.h. Lichtintensität), Polarisation einer Schwingung (z.B. Polarisation von Licht), Ausbreitungsrichtung einer Schwingung (z.B. Ausbreitungsrichtung von Licht), Ausbreitungsrichtung von Kraftlinien (z.B. Ausbreitungsrichtung von Magnetfeldlinien), Stärke von Kraftlinien (z.B. Stärke von Magnetfeldlinien). Eine weitere Dimension des mehrdimensionalen Messwerts S2 kann ebenfalls aus der oben genannten Gruppe ausgewählt sein, wobei die weitere Dimension dann zur (ersten) Dimension verschieden ist.

Der mindestens eine Sensor der 2. Kategorie kann ausgewählt sein aus der Gruppe bestehend aus Sensoren zur Detektion von longitudinalen Schwingungen, Sensoren zur Detektion von transversalen Schwingungen, Sensoren zur Detektion von Magnetfeldern, Sensoren zur Detektion von elektrischen Feldern, chemischen Sensoren, elektrischen Sensoren und Kombinationen hiervon. Bevorzugt ist der Sensor der 2. Kategorie ausgewählt aus der Gruppe bestehend aus Schallsensor, Vibrationssensor, Lichtsensor (z.B. eine Kamera), IR-Sensor, Radarsensor, Magnetfeldsensor, Leitfähigkeitssensor, pH-Sensor, Sensor zur Erfassung einer Zuckerkonzentration und Kombinationen hiervon. Bevorzugt handelt es sich beim Sensor der 2. Kategorie um einen Radarsensor, einen Lichtsensor (z.B. eine Zeilenkamera oder Matrixkamera), einen Schallsensor (z.B. eine Akustiksensor) und Kombinationen hiervon.

Radarsensoren sind besonders bevorzugte Sensoren der 2. Kategorie. Sie haben den Vorteil, dass sie sehr genaue Informationen über die Beschaffenheit bestimmter Getränkebehälter liefern und somit eine feine und präzise Unterscheidung von verschiedenen Getränkebehältern ermöglichen.

Lichtsensoren, wie Zeilenkameras oder Matrixkameras, sind ebenfalls besonders bevorzugte Sensoren der 2. Kategorie. Sie liefern über eine Zeit x in der Matrix y/z einen Wert y und einen Wert z, wobei es sich beim Wert y beispielsweise eine bestimmte Lichtintensität (Lichthelligkeit) und beim Wert z beispielsweise um eine bestimmte Lichtfrequenz (Lichtfarbe) handelt. Bei ToF-Sensoren kann als zusätzliche Dimension ein räumlicher Abstand zum Sensor erfasst werden. Lichtsensoren sind wie Radarsensoren dazu geeignet, Informationen über die Beschaffenheit bestimmter Getränkebehälter zu liefern.

Schallsensoren (wie z.B. Akustiksensoren) sind auch besonders bevorzugte Sensoren der 2. Kategorie. Schallsensoren sind beispielsweise dazu geeignet, Mahlgeräusche eines Mahlwerks (z.B. für Kaffeebohnen) des Getränkebereiters zu erfassen und ein Leerlaufen des Mahlwerks zu verhindern. Für diese Funktion ist der Schallsensor bevorzugt in der Nähe eines Mahlwerks des Getränkebereiters angebracht. Der Vorteil des Einsatzes eines solchen Schallsensors als Sensor der 2. Kategorie ist, dass über die von diesem Sensor aufgezeichnete Schallkurve ein Schallmuster kurz vor dem Leerlaufen des Mahlwerks dazu verwendet werden kann, dem Benutzer ein baldiges Leerlaufen des Mahlwerks anzuzeigen. Durch das Voraussagen des baldigen Leerlaufs des Mahlwerks kann ein Benutzer zum Nachfüllen eines Bohnenbehälters veranlasst werden und somit verhindert werden, dass sich der Bohnenbehälter während dem Bezug eines Getränks (z.B. Kaffee) leert. Dies bewirkt, dass die Bereitstellung eines Getränks (z.B. Kaffee) unterbrechungsfrei durchgeführt werden kann und am Getränkebereiter keine Ausfallzeit auftritt. Ferner ist das Problem bekannt, dass ein einmal leergemahlenes Mahlwerks einen gewissen Vorlauf (d.h. eine gewisse Mahlzeit) benötigt, um sich nach der Auffüllung des Bohnenbehälters wieder mit (gemahlenen) Bohnen zu füllen. Dies verlängert einerseits die Zeit bis zur Bereitstellung eines Getränks nach der Auslösung eines Getränkebezugs. Andererseits kommt es zu Dosierschwankungen in Bezug auf die Menge an gemahlenen Bohnen, die zur Zubereitung des Getränks verwendet werden und somit zu einer gewissen Variabilität in der Zusammensetzung des nach dem Leerlauf des Mahlwerks bezogenen Getränks. Der Einsatz des Schallsensors bewirkt, dass das Leermahlen des Mahlwerks von vornherein verhindert werden kann. Folglich kann von dem Getränkebereiter ohne Ausfallzeiten und ohne Verzögerungen beim Bezug stets ein Getränk mit gleichbleibender Produktzusammensetzung bereitgestellt werden.

In einer bevorzugten Ausgestaltungsform ist das mindestens eine bestimmte Ereignis (das beim Getränkebereiter ausgelöst werden kann) ausgewählt aus der Gruppe bestehend aus
i) Interaktion des Getränkebereiters mit einem Benutzer, bevorzugt ausgewählt aus der Gruppe bestehend aus der Ausgabe einer Aufforderung des Getränkebereiters an den Benutzer, Anzeige einer bestimmten Getränkeauswahl, Ausblenden einer bestimmten Getränkeauswahl und Kombinationen hiervon, wobei die Aufforderung besonders bevorzugt ausgewählt ist aus der Gruppe bestehend aus Kaffeebohnen nachfüllen, Satzbehälter leeren, Wassertank füllen, Milchtank füllen, Starten eines Pflegeprogramms (z.B. Start eines Reinigungsprogramms, Start eines Entkalkungsprogramms und/oder Start eines Spülprogramms) und Kombinationen hiervon;
ii) Instandhaltung des Getränkebereiters, bevorzugt ausgewählt aus der Gruppe bestehend aus Erfassen und/oder Auswerten von Fehlern in Abläufen des Getränkebereiters, Erfassen und/oder Auswerten von Fehlern in Komponenten des Getränkebereiters, Bestimmung eines Serviceintervalls des Getränkebereiters, Auslösen eines Serviceanrufs des Getränkebereiters, Festlegen und/oder Anpassen einer Einstellung des Getränkebereiters;
iii) Steuerung mindestens einer Komponente des Getränkebereiters, bevorzugt Ausgabe eines bestimmten Getränks über den Getränkebereiter, Bewegen eines Getränkeauslaufs des Getränkebereiters, Durchführung eines Pflegeprogramms des Getränkebereiters und Kombinationen hiervon; und
iv) Kombinationen hiervon.

Ferner wird erfindungsgemäß ein Verfahren zum Betrieb eines Getränkebereiters bereitgestellt, umfassend die Schritte
a) Erfassen vom mehreren Messwerten S2 von mindestens einem Sensor einer 2. Kategorie, wobei unter einem Sensor der 2. Kategorie ein Sensor verstanden wird, der zu einem bestimmten Zeitpunkt mehrere Messwerte S2 liefert;
b) Vergleich der Messwerte S2 mit Zielwerten für die Messwerte S2, die in einem Datenspeicher des Getränkebereiters gespeichert sind und für mindestens ein bestimmtes Ereignis kodieren, durch eine Steuereinheit des Getränkebereiters;
c) Automatisches Auslösen oder nicht Auslösen von mindestens einem Ereignis bei dem Getränkebereiter basierend auf diesem Vergleich; und
d) Erfassen von mindestens einem Messwert S1 von mindestens einem Sensor einer 1. Kategorie, falls kein Ereignis ausgelöst wird, wobei unter einem Sensor der 1. Kategorie ein Sensor verstanden wird, der zu einem bestimmten Zeitpunkt nur einen einzelnen Messwert S1 liefert;

wobei in dem Fall, in dem nach dem Vergleich mit Zielwerten für die Messwerte S2 kein Ereignis ausgelöst wird, von der Steuereinheit mindestens ein Messwert S1 von mindestens einem Sensor einer 1. Kategorie des Getränkebereiters verwendet wird, um den Messwerten S2, die nach einem Vergleich mit Zielwerten für die Messwerte S2 kein Ereignis auslösen, mindestens ein Ereignis zuzuordnen, und diese Messwerte S2 als Zielwerte für das mindestens eine Ereignis auf dem Datenspeicher gespeichert werden
dadurch gekennzeichnet, dass, über den Getränkebereiter, Messwerte S2 des mindestens einen Sensors der 2. Kategorie, basierend auf einer Bestätigung über den mindestens einen Sensor der 1. Kategorie durch einen Benutzer, bestimmten, regelmäßig auftretenden, Ereignissen zugeordnet werden, wobei das Zuordnen nach dem Prinzip des maschinellen Lernens erfolgt, und wobei die Speicherung der Messwerte S2 zu den Ereignissen automatisch auf dem Datenspeicher erfolgt.

Der in dem erfindungsgemäßen Verfahren eingesetzte Getränkebereiter kann eine Bedienerschnittstelle, bevorzugt ein Touchscreen, enthalten. Über die Bedienerschnittstelle wird bevorzugt ein ausgelöstes Ereignis angezeigt. Ferner kann über die Bedienerschnittstelle einen Countdown bis zur Umsetzung eines ausgelösten Ereignisses angezeigt werden. Zudem kann über die Bedienerschnittstelle eine (bestimmte) Getränkeauswahl angezeigt werden. Darüberhinaus können über die Bedienerschnittstelle Informationen über Messwerte S2 des mindestens einen Sensor einer 2. Kategorie angezeigt werden, bevorzugt Informationen ausgewählt aus der Gruppe bestehend aus Höhe eines Getränkebehälters, Füllstand eines Getränkebehälters, Füllstand eines Bohnenbehälters des Getränkebereiters, Leermahlen einer Mühle des Getränkebereiters und Kombinationen hiervon. Weiterhin können über die Bedienerschnittstelle Zielwerte für S2 angezeigt werden und auf Wunsch eines Benutzers bestätigt und/oder gelöscht werden.

In einer bevorzugten Ausführungsform des Verfahrens wird das in den Zielwerten für die Messwerte S2 kodierte mindestens eine Ereignis ausgelöst wird, wenn sich die Messwerte S2 mit einer Wahrscheinlichkeit von jeweils >50%, bevorzugt ≥60%, besonders bevorzugt ≥70%, ganz besonders bevorzugt ≥80%, insbesondere ≥90%, Zielwerten für die Messwerte S2 zuordnen lassen.

In dem erfindungsgemäßen Verfahren kann beispielsweise der mindestens eine Messwert S1 erfasst und verwendet werden, wenn sich die Messwerte S2 mit einer Wahrscheinlichkeit von jeweils nur ≤50%, bevorzugt ≤40%, besonders bevorzugt ≤30%, ganz besonders bevorzugt ≤20%, insbesondere ≤10%, Zielwerten für die Messwerte S2 zuordnen lassen.

In einer bevorzugten Ausführungsform des Verfahrens liefert der mindestens eine Sensor der 1. Kategorie zu einem bestimmten Zeitpunkt einen eindimensionalen Messwert S1. Der eindimensionale Messwert kann ausgewählt sein aus der Gruppe bestehend aus Temperatur, Druck, Geschwindigkeit, Flussgeschwindigkeit, elektrische Kapazität, Bewegungsrichtung, Strecke, Zeit und Masse.

Der in dem Verfahren eingesetzte Sensor der 1. Kategorie kann die gleichen Eigenschaften aufweisen wie der oben beschriebene Sensor der 1. Kategorie des Getränkebereiters.

Weiterhin bevorzugt ist es, wenn in dem Verfahren mindestens ein Sensor der 2. Kategorie verwendet wird, der zu einem bestimmten Zeitpunkt mehrdimensionale Messwerte S2 liefert, bevorzugt mindestens dreidimensionale Messwerte S2, insbesondere mindestens vierdimensionale Messwerte S2. Eine Dimension des mehrdimensionalen Messwerts kann ausgewählt sein aus der Gruppe bestehend aus Frequenz einer Schwingung (z.B. Wellenlänge von Licht, d.h. Lichtfarbe), Amplitude einer Schwingung (z.B. Amplitude von Licht, d.h. Lichtintensität), Polarisation einer Schwingung (z.B. Polarisation von Licht), Ausbreitungsrichtung einer Schwingung (z.B. Ausbreitungsrichtung von Licht), Ausbreitungsrichtung von Kraftlinien (z.B. Ausbreitungsrichtung von Magnetfeldlinien), Stärke von Kraftlinien (z.B. Stärke von Magnetfeldlinien). Eine weitere Dimension des mehrdimensionalen Messwerts kann ebenfalls aus der oben genannten Gruppe ausgewählt sein.

Der in dem Verfahren eingesetzte Sensor der 2. Kategorie kann die gleichen Eigenschaften aufweisen wie der oben beschriebene Sensor der 2. Kategorie des Getränkebereiters.

Das Verfahren kann dadurch gekennzeichnet sein, dass das mindestens eine bestimmte Ereignis ausgewählt ist aus der Gruppe bestehend aus
i) Interaktion des Getränkebereiters mit einem Benutzer, bevorzugt ausgewählt aus der Gruppe bestehend aus der Ausgabe einer Aufforderung des Getränkebereiters an den Benutzer, Anzeige einer bestimmten Getränkeauswahl, Ausblenden einer bestimmten Getränkeauswahl und Kombinationen hiervon, wobei die Aufforderung besonders bevorzugt ausgewählt ist aus der Gruppe bestehend aus Kaffeebohnen nachfüllen, Satzbehälter leeren, Wassertank füllen, Milchtank füllen, Starten eines Pflegeprogramms und Kombinationen hiervon;
ii) Instandhaltung des Getränkebereiters, bevorzugt ausgewählt aus der Gruppe bestehend aus Erfassen und/oder Auswerten von Fehlern in Abläufen des Getränkebereiters, Erfassen und/oder Auswerten von Fehlern in Komponenten des Getränkebereiters, Bestimmung eines Serviceintervalls des Getränkebereiters, Auslösen eines Serviceanrufs des Getränkebereiters, Festlegen und/oder Anpassen einer Einstellung des Getränkebereiters;
iii) Steuerung mindestens einer Komponente des Getränkebereiters, bevorzugt Ausgabe eines bestimmten Getränks über den Getränkebereiter, Bewegen eines Getränkeauslaufs des Getränkebereiters, Durchführung eines Pflegeprogramms des Getränkebereiters und Kombinationen hiervon; und
iv) Kombinationen hiervon.

Anhand der folgenden Figuren und Beispiele soll der erfindungsgemäße Gegenstand näher erläutert werden, ohne diesen auf die hier dargestellten, spezifischen Ausgestaltungsformen einschränken zu wollen.

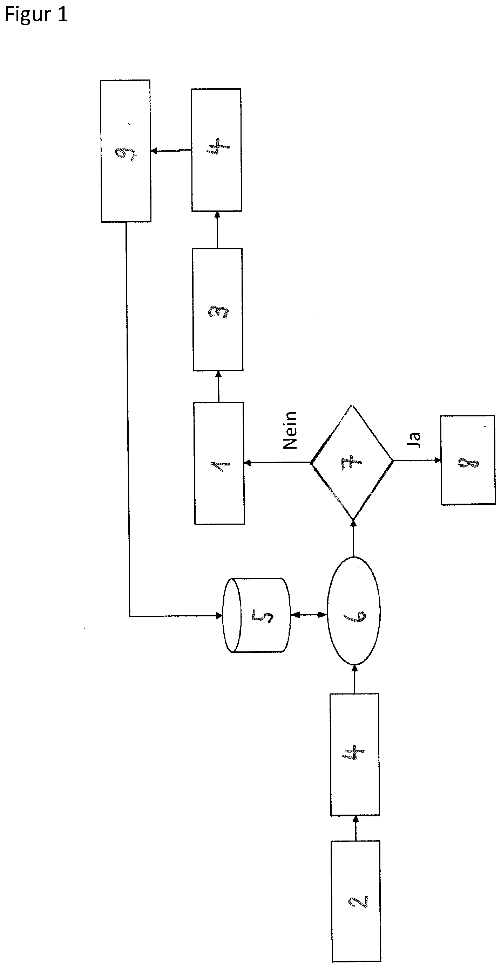

Figur 1 zeigt den Funktionsmechanismus eines erfindungsgemäßen Getränkebereiters. Wird ein zu analysierendes Objekt von dem Sensor der 2. Kategorie 2 erfasst, werden von dem Sensor der 2. Kategorie 2 mehrere Messwerte 4 (ein sog. Muster) an die Steuereinheit 6 des Getränkebereiters gesendet. Die Steuereinheit 6 greift auf den Datenspeicher 5 zu und prüft, ob die erfassten Messwerte 4 mit einer bestimmten Wahrscheinlichkeit bereits bekannt sind, d.h. ob diese auf dem Datenspeicher 5 gespeichert und dort einem bestimmten Ereignis zugeordnet sind. Kann diese Frage 7 bejaht werden, löst der Getränkebereiter ein bestimmtes Ereignis 8 aus. Wird diese Frage verneint, wartet der Getränkebereiter auf einen einzelnen Messwert 3 des Sensors der 1. Kategorie 1 ab. Nach dem Erhalt des Messwerts 3 des Sensors der 1. Kategorie 1 erfolgt eine Zuordnung der vom Sensor der 2. Kategorie 2 erfassten Messwerte 4 zu mindestens einem bestimmten Ereignis 8 beim Getränkebereiter. Auf dem Datenspeicher 5 ist ursprünglich kein Muster 4 mit einem Ereignis 8 verbunden. Ein Messwert 3 des Sensors der 1. Kategorie 1 wird dann dafür verwendet, mit den gemessenen beiden Messwerten 4 des Sensors der 2. Kategorie 2 ein bestimmtes Ereignis 8 zu verbinden und diese Verbindung auf dem Datenspeicher 5 zu speichern (= maschinelles Lernen).

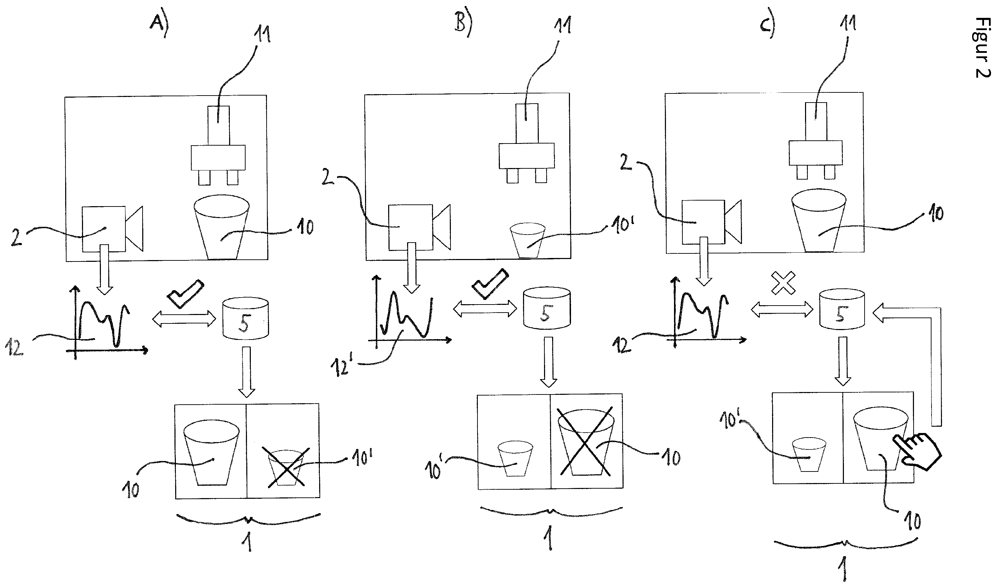

Figur 2 zeigt den Funktionsmechanismus eines erfindungsgemäßen Getränkebereiters mit einem Radarsensor 2 zur Erfassung von mehreren Messwerten 12, 12' von einem Gefäß 10, 10', die von einem Benutzer unter eine Getränkeausgabeeinheit 11 des Getränkebereiters gestellt wird.

In Figur 2A ist das Gefäß ein Latte-Macchiato-Glas 10, das vom Radarsensor 2 ein für dieses Glas 10 charakteristisches Frequenzspektrum 12 erzeugt. Im Fall von Figur 2A ist dieses charakteristische Frequenzspektrum 12 bereits auf dem Datenspeicher 5 des Getränkebereiters gespeichert (siehe √-Symbol), sodass der Getränkebereiter das Latte-Macchiato-Glas 10 als solches erkennt und ohne weitere Eingabe des Benutzers (z.B. über eine Interaktion mit einem Sensor der 1. Kategorie 1) ein mit diesem Glas 10 verknüpftes Ereignis durchführt (z.B. Ausgabe eines Latte-Macchiato über die Getränkeausgabeeinheit 11 des Getränkebereiters oder Anzeigen bzw. Hervorheben einer bestimmten Getränkeauswahl). Ist das Ereignis ein Anzeigen bzw. Hervorheben einer bestimmten Getränkeauswahl (z.B eine vergrößerte Darstellung bestimmter Getränke auf einer Bedienoberfläche des Getränkebereiters), so kann vom Benutzer konkret mit einem Tastendruck (Betätigung eines Sensors der 1. Kategorie) oder einer Gestik, einer Mimik oder einer akustischen Ansage (Betätigung eines Sensors der 2. Kategorie) eine Anwahl und Ausgabe eines bestimmten Getränks aus der Getränkeauswahl erfolgen).

Entsprechendes gilt für die in Figur 2B dargestellte Situation. In Figur 2B wird anstelle des Latte-Macchiato-Glases 10 eine Espressotasse 10' unter die Getränkeausgabeeinheit 11 des Getränkebereiters gestellt wird. Da das vom Radarsensor 2 für die Espressotasse 10' erfasste, charakteristische Frequenzspektrum 12' bereits im Datenspeicher 5 gespeichert ist (siehe √-Symbol), erkennt der Getränkebereiter die Espressotasse 10' als solche und führt ohne weitere Eingabe des Benutzers (z.B. über eine Interaktion mit einem Sensor der 1. Kategorie 1) ein mit dieser Tasse 10' verknüpftes Ereignis durch (z.B. Ausgabe eines Espresso über die Getränkeausgabeeinheit 11 des Getränkebereiters.

In Figur 2C ist dagegen eine Situation dargestellt, in welcher das vom Radarsensor 2 für das Latte-Macchiato-Glas 10 erfasste Muster 12 noch nicht auf dem Datenspeicher 5 des Getränkebereiters gespeichert ist bzw. keine Ähnlichkeit mit dort abgespeicherten Mustern aufweist (siehe X-Symbol). Dies bewirkt, dass der Getränkebereiter einen vom Sensor der 1. Kategorie 1 (hier: ein Touchscreen 1 am Getränkebereiter) erfassen Messwert (hier: eine Impedanzänderung, die sich durch die Berührung eines auf dem Touchscreen dargestellten Latte-Macchiato-Glases 10 durch einen Benutzer ändert) dazu verwendet, das erfasste Muster 12 dem Ereignis "Ausgabe von Latte-Macchiato" zuzuordnen und diese Zuordnung auf dem Datenspeicher 5 zu speichern.

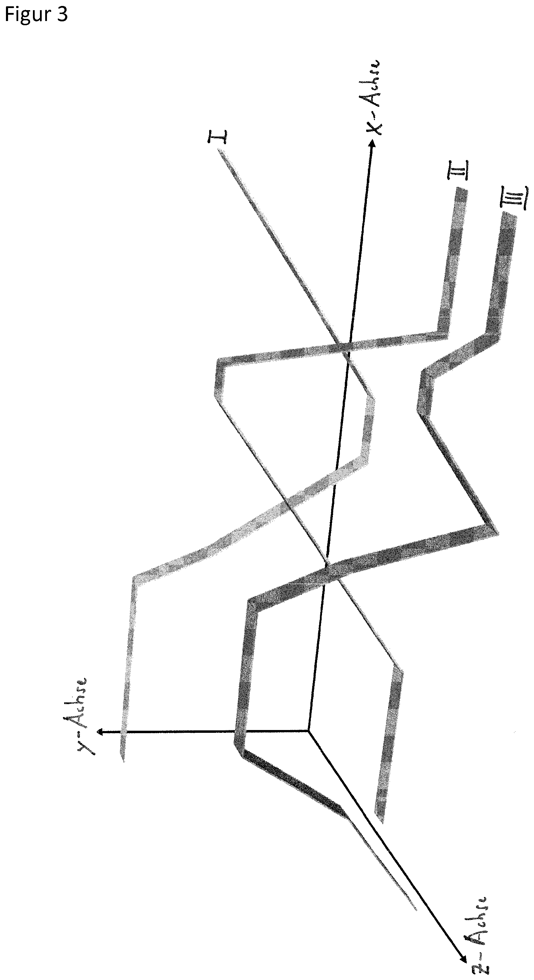

Figur 3 zeigt ein Beispiel für mehrere Messwerte des Sensors der 2. Kategorie. Es handelt sich bei diesem Sensor der 2. Kategorie um einen zweidimensionalen Sensor, der im Verlauf der Zeit (x-Achse) die Intensität (y-Achse = 1. Dimension) von elektromagnetischer Strahlung unterschiedlicher Frequenz I, II, III (z-Achse = 2. Dimension)) erfasst.

### Beispiel 1 - Getränkebereiter mit elektromagnetischem Sensor zur Tassenerkennung

Der Getränkebereiter ist eine Kaffemaschine, in der ein Sensor der 2. Kategorie eingebaut ist. Bei diesem Sensor handelt es sich hier um einen Radarsensor (z.B. einen Radarsensor mit 60Ghz der Infineon Technologies AG, Empfindlichkeit: sub-mm-Bereich) oder um einen Bildsensor.

Zunächst wird ein Glas oder eine Tasse unter den Getränkebereiter gestellt. Im Falle eines Radarsensors wird als erster Messwert eine Frequenz der detektierten Radarstrahlung und als zweiter Messwert eine Amplitude der detektierten Radarstrahlung gemessen. Im Falle eines Bildsensors wird eine Frequenz des detektierten Lichts (Farbe des Lichts) und eine Amplitude des detektierten Lichts (Helligkeit des Lichts) erfasst.

Da auf dem permanenten Speicher des Getränkebereiters keine Zielwerte vorgegeben sind, liegt auch keine Zuordnung der Messwerte (d.h. des Musters) zu einem bestimmten Ereignis vor.

Dieser Getränkebereiter weist als Sensor der 1. Kategorie eine Bedienereingabeschnittstelle, z.B. ein Touchpad, auf. Über die Bedienereingabeschnittstelle werden dem Benutzer verschiedene Getränke angezeigt, die vom Getränkebereiter ausgegeben werden können.

Hat der Benutzer ein Latte-Macchiato-Glas unter den Getränkebereiter gestellt, da er einen Latte-Macchiato zubereitet haben möchte, wählt der Benutzer nun über Druck auf das Touchpad die Ausgabe von Latte Macchiato aus. Das Signal des Sensors der 1. Kategorie (Touchpad) wird nun verwendet, um das über den Radarsensor oder den Bildsensor aufgenommene Signal mit der Ausgabe von Latte Macchiato zu verknüpfen und diese Verknüpfung auf dem permanenten Datenspeicher zu speichern. Wird beim nächsten Mal das gleiche Latte-Macchiato-Glas unter den Getränkebereiter gestellt, erfolgt die Ausgabe von Latte Macchiato ohne Bestätigung über das Touchpad, da der Getränkebereiter das über den Sensor der 2. Kategorie erfasste Muster des bestimmten Latte-Macchiato-Glases der Ausgabe von Latte Macchiato zugeordnet hat.

Da die Form von Latte-Macchiato-Gläser innerhalb einer Serie bzw. zwischen verschiedenen Herstellern schwanken können, wird die Zuweisung umso besser, je öfter ein Latte-Macchiato-Glas unter den Getränkebereiter gestellt wird (Zunahme der Forminformationen). Auch bei wiederholter Verwendung eines bestimmten Glases steigt die Genauigkeit, da auch die Sensoren der 2. Kategorie Messfehler aufweisen können, deren Bedeutung mit jeder weiteren Wiederholung der Messung abnimmt. Irgendwann ist eine Bedienereingabe über das Touchpad nicht mehr nötig, da die Maschine die erfassten Messwerte eindeutig einem Latte-Macchiato-Glas zuordnet. Auf der Bedienoberfläche des Getränkebereiters (z.B. Display oder Touchscreen) kann als Folge nur das Getränk dargestellt werden, das aufgrund des Vergleichs mit dem Datenspeicher zu den letzten Ausgaben mit demselben Muster S2 und dem passenden Tastendruck von S1 gepasst hat (hier: ein Latte-Macchiato). Der Benutzer hat dann die Wahl, das Getränk (hier: nur noch einen auf der Bedienoberfläche dargestellten Latte-Macchiato) auszuwählen oder ggf. mit einem anderen Befehl abzubrechen.

Natürlich kann die Steuereinheit des Getränkebereiters so konfiguriert sein, dass der Getränkebereiter dem Benutzer nach Unterstellen des Gefäßes eine Getränkeauswahl anbietet und/oder bestimmte Getränke sperrt. Falls für ein Latte-Macchiato-Glas keine alternativen Getränke zur Verfügung stehen, kann die Steuereinheit so konfiguriert sein, dass die Ausgabe von Latte Macchiato automatisiert gestartet wird. Dies kann beispielsweise über eine Anzeige "Getränk wird automatisch gestartet in X Sekunden". Zum Abbrechen Y drücken" erfolgen, wobei X für Sekunden stehen und Y für eine zu drückende Taste am Getränkebereiter.

Beispielsweise funktioniert der Radarsensor als Sensor der 2. Kategorie so, dass ein Teil der Radarwellen direkt an der Oberfläche des zu untersuchenden Objekts (z.B. eine Kaffeetasse) reflektiert wird und ein anderer Teil vor der Reflexion in das Objekt eindringt, sich durch die höhere Dichte des Objekts verglichen zur umgebenden Luft verlangsamt und dann wieder aus dem Objekt austritt. Die Menge der reflektierten Strahlen und die Laufzeitunterschiede zwischen den reflektierenden Strahlen und den emittierenden Strahlen ist charakteristisch für verschiedene Objekte und Materialien.

Ferner können über zusätzliche Sensoren im Getränkebereiter weitere Informationen über das Glas bzw. die Tasse gesammelt werden und den Sensorsignalen zugeordnet werden. Folgende Sensoren sind denkbar:
- Kollisionserkennungssensor zur Bestimmung der Höhe des Gefäßes;
- Flusssensor zum Schutz vor Überlauf von Gefäß;
- Drucksensor zum Abbruch des Getränkebezugs zur Anpassung des Volumenbezugs an die Gewohnheiten des Benutzers.

### Beispiel 2 - Getränkebereiter mit Akustiksensor zur Bohnenleermeldung

Dieser Getränkebereiter ist eine Kaffeemaschine und enthält einen Akustiksensor als Sensor der 2. Kategorie. Der Akustiksensor "hört" verschiedene Ereignisse bzw. Fehler. Beispielsweise gibt die Mühle einer Kaffeemaschine beim Leermahlen ein charakteristisches Geräusch ab. Dieses Geräusch kann vom Akustiksensor aufgezeichnet werden und mit dem Ereignis verknüpft werden, dass die Mühle den Mahlvorgang stoppen soll. Detektiert der Akustiksensor nach diesem "Lernprozess" erneut das charakteristische Geräusch, kann die Mühle gestoppt werden, bevor es zum vollständigen Leermahlen der Mühle kommt.

Im Stand der Technik liefert beispielsweise nur ein Stromsensor Informationen darüber, ob ein Mühlenmotor leerläuft, d.h. keine Kaffeebohnen mehr mahlt. In diesem Fall sinkt die Höhe des vom Stromsensor detektierten elektrischen Stroms. Nun kann das von der Mühle abgegebene Geräuschmuster erfasst werden und beispielsweise bereits 2 bis 3 Sekunden vor Erreichen des Stromgrenzwertes eingelernt werden. Durch diese Maßnahme erfasst der Getränkebereiter einen Zustand kurz vor dem "Leergehen" der Mühle und kann die Mühle rechtzeitig (vor erkennen des niedrigeren Stromwertes) abschalten. Der Vorteil hierbei ist, dass eine Produktzubereitung nicht durch Nachfüllen von Bohnen unterbrochen wird: Bei einem Leermahlen der Mühle sind Mahlwerk und Mühlenauslauf leer und nach dem Befüllen mit Kaffeebohnen wird ein gewisser Vorlauf (Mahlzeit) benötigt um das System mit Bohnen und gemahlenen Kaffeemehl zu befüllen. Erst danach wird wieder Kaffeemehl korrekt in die Brühkammer gefördert. Dadurch entsteht ein Zeitverlust und es kommt zu Dosierschwankungen in Bezug auf das gemahlene Kaffeemehl.

Auch das Geräusch beim Nachfüllen von Bohnen könnte detektiert werden und ein bestimmtes Ereignis mit diesem Vorgang verbunden werden.

### Bezugszeichenliste

- 1:: Sensor der 1. Kategorie (z.B. Touch-Display);
- 2:: Sensor der 2. Kategorie (z.B. Radarsensor);
- 3:: einzelner Messwert S1 des Sensors der 1. Kategorie (z.B. ein diskreter Druckwert eines Drucksensors);
- 4:: mehrere Messwerte S2 des Sensors der 2. Kategorie (z.B. ortsaufgelöst diskrete Frequenzen und diskrete Intensitäten einer elektromagnetischen Strahlung);
- 5:: Datenspeicher;
- 6:: Steuereinheit;
- 7:: Bestimmung, ob Messwerte 4 in Datenspeicher 5 vorhanden sind;
- 8:: Ereignis, das vom Getränkebereiter ausgelöst wird;
- 9:: Zuordnung von Messwerten 4 zu mindestens einem Ereignis;
- 10:: Latte-Macchiato-Glas;
- 10':: Espressotasse;
- 11:: Getränkausgabeeinheit des Getränkebereiters;
- 12:: Frequenzspektrum eines Latte-Macchiato-Glases 10;
- 12':: Frequenzspektrum einer Espressotasse 10';
- I:: 1. Frequenz elektromagnetischer Strahlung;
- II:: 1. Frequenz elektromagnetischer Strahlung;
- III:: 3. Frequenz elektromagnetischer Strahlung;

## Patentansprüche

1. Getränkebereiter, enthaltend
a) mindestens einen Sensor einer 1. Kategorie (1), wobei unter einem Sensor der 1. Kategorie (1) ein Sensor verstanden wird, der zu einem bestimmten Zeitpunkt nur einen einzelnen Messwert S1 (3) liefert;
b) mindestens einen Sensor einer 2. Kategorie (2), wobei unter einem Sensor der 2. Kategorie (2) ein Sensor verstanden wird, der zu einem bestimmten Zeitpunkt mehrere Messwerte S2 (4) liefert;
c) einen Datenspeicher (5);
d) eine Steuereinheit (6), wobei die Steuereinheit (6) dazu konfiguriert ist, die Messwerte S2 (4) mit Zielwerten für die Messwerte S2, die im Datenspeicher (5) gespeichert sind und für mindestens ein bestimmtes Ereignis (8) kodieren, zu vergleichen und basierend auf diesem Vergleich bei dem Getränkebereiter mindestens ein Ereignis (8) automatisch auszulösen oder nicht auszulösen;
wobei die Steuereinheit (6) des Getränkebereiters ferner dazu konfiguriert ist, mindestens einen Messwert S1 (3) zu erfassen und zu verwenden, um bestimmte Messwerte S2 (4), die nach einem Vergleich mit Zielwerten für die Messwerte S2 kein Ereignis (8) auslösen, mindestens einem Ereignis (8) zuzuordnen, und diese Messwerte S2 (4) als Zielwerte für das mindestens eine Ereignis (8) auf dem Datenspeicher (5) zu speichern,
**dadurch gekennzeichnet, dass** der Getränkebereiter weiterhin dazu konfiguriert ist, Messwerte S2 (4) des mindestens einen Sensors der 2. Kategorie (2), basierend auf einer Bestätigung über den mindestens einen Sensor der 1. Kategorie (1) durch einen Benutzer, bestimmten, regelmäßig auftretenden, Ereignissen (8) zuzuordnen, wobei das Zuordnen nach dem Prinzip des maschinellen Lernens erfolgt, und
wobei die Speicherung der Messwerte S2 (4) zu den Ereignissen (8) automatisch auf dem Datenspeicher (5) erfolgt.

2. Getränkebereiter nach dem vorhergehenden Anspruch, **dadurch gekennzeichnet, dass** der Getränkebereiter eine Bedienerschnittstelle, bevorzugt ein Touchscreen, enthält, wobei die Bedienerschnittstelle bevorzugt dazu konfiguriert ist,
i) ein ausgelöstes Ereignis (8) anzuzeigen; und/oder
ii) einen Countdown bis zur Umsetzung eines ausgelösten Ereignisses (8) anzuzeigen; und/oder
iii) eine Getränkeauswahl anzuzeigen;
iv) Informationen über Messwerte S2 (4) des mindestens einen Sensor einer 2. Kategorie (2) anzuzeigen, bevorzugt Informationen ausgewählt aus der Gruppe bestehend aus Höhe eines Getränkebehälters, Füllstand eines Getränkebehälters, Füllstand eines Bohnenbehälters des Getränkebereiters, Leermahlen einer Mühle des Getränkebereiters und Kombinationen hiervon; und/oder
v) Zielwerte für S2 anzuzeigen und auf Wunsch eines Benutzers zu bestätigen und/oder zu löschen.

3. Getränkebereiter nach einem der vorhergehenden Ansprüche,
**dadurch gekennzeichnet, dass** die Steuereinheit (6) dazu konfiguriert ist, das in den Zielwerten für die Messwerte S2 kodierte mindestens eine Ereignis (8) auszulösen, wenn sich die Messwerte S2 (4) mit einer Wahrscheinlichkeit von jeweils >50%, bevorzugt ≥60%, besonders bevorzugt ≥70%, ganz besonders bevorzugt ≥80%, insbesondere ≥90%, Zielwerten für die Messwerte S2 (4) zuordnen lassen.

4. Getränkebereiter nach einem der vorhergehenden Ansprüche,
**dadurch gekennzeichnet, dass** die Steuereinheit (6) dazu konfiguriert ist, mindestens einen Messwert S1 (3) zu verwenden, wenn sich die Messwerte S2 (4) mit einer Wahrscheinlichkeit von jeweils nur ≤50%, bevorzugt ≤40%, besonders bevorzugt ≤30%, ganz besonders bevorzugt ≤20%, insbesondere ≤10%, Zielwerten für die Messwerte S2 zuordnen lassen.

5. Getränkebereiter nach einem der vorhergehenden Ansprüche,
**dadurch gekennzeichnet, dass** der mindestens einen Sensor der 1. Kategorie (1) dazu konfiguriert ist, zu einem bestimmten Zeitpunkt einen nur eindimensionalen Messwert S1 (3) zu liefern.

6. Getränkebereiter nach einem der vorhergehenden Ansprüche,
**dadurch gekennzeichnet, dass** der mindestens einen Sensor der 2. Kategorie (2) dazu konfiguriert ist, zu einem bestimmten Zeitpunkt mehrdimensionale Messwerte S2 (4) zu liefern, bevorzugt mindestens dreidimensionale Messwerte S2 (4), besonders bevorzugt mindestens vierdimensionale Messwerte S2 (4).

7. Getränkebereiter nach einem der vorhergehenden Ansprüche,
**dadurch gekennzeichnet, dass** das mindestens eine bestimmte Ereignis (8) ausgewählt ist aus der Gruppe bestehend aus Interaktion des Getränkebereiters mit einem Benutzer, Instandhaltung des Getränkebereiters, Steuerung mindestens einer Komponente des Getränkebereiters und Kombinationen hiervon.

8. Verfahren zum Betrieb eines Getränkebereiters, umfassend die Schritte
a) Erfassen vom mehreren Messwerten S2 von mindestens einem Sensor einer 2. Kategorie (2), wobei unter einem Sensor der 2. Kategorie (2) ein Sensor verstanden wird, der zu einem bestimmten Zeitpunkt mehrere Messwerte S2 (4) liefert;
b) Vergleich der Messwerte S2 (4) mit Zielwerten für die Messwerte S2, die in einem Datenspeicher (5) des Getränkebereiters gespeichert sind und für mindestens ein bestimmtes Ereignis (8) kodieren, durch eine Steuereinheit (6) des Getränkebereiters;
c) Automatisches Auslösen oder nicht Auslösen von mindestens einem Ereignis (8) bei dem Getränkebereiter basierend auf diesem Vergleich; und
d) Erfassen von mindestens einem Messwert S1 (3) von mindestens einem Sensor einer 1. Kategorie (1), falls kein Ereignis (8) ausgelöst wird, wobei unter einem Sensor der 1. Kategorie (1) ein Sensor verstanden wird, der zu einem bestimmten Zeitpunkt nur einen einzelnen Messwert S1 (3) liefert;
wobei in dem Fall, in dem nach dem Vergleich mit Zielwerten für die Messwerte S2 kein Ereignis (8) ausgelöst wird, von der Steuereinheit (6) mindestens ein Messwert S1 (3) von mindestens einem Sensor einer 1. Kategorie (1) des Getränkebereiters verwendet wird, um den Messwerten S2 (4), die nach einem Vergleich mit Zielwerten für die Messwerte S2 kein Ereignis (8) auslösen, mindestens ein Ereignis (8) zuzuordnen, und diese Messwerte S2 (4) als Zielwerte für das mindestens eine Ereignis (8) auf dem Datenspeicher (5) gespeichert werden,
**dadurch gekennzeichnet, dass**, über den Getränkebereiter, Messwerte S2 (4) des mindestens einen Sensors der 2. Kategorie (2), basierend auf einer Bestätigung über den mindestens einen Sensor der 1. Kategorie (1) durch einen Benutzer, bestimmten, regelmäßig auftretenden, Ereignissen (8) zugeordnet werden, wobei das Zuordnen nach dem Prinzip des maschinellen Lernens erfolgt, und
wobei die Speicherung der Messwerte S2 (4) zu den Ereignissen (8) automatisch auf dem Datenspeicher (5) erfolgt.

9. Verfahren nach Anspruch 8, **dadurch gekennzeichnet, dass** der Getränkebereiter eine Bedienerschnittstelle, bevorzugt ein Touchscreen, enthält, wobei über die Bedienerschnittstelle bevorzugt
i) ein ausgelöstes Ereignis (8) angezeigt wird; und/oder
ii) einen Countdown bis zur Umsetzung eines ausgelösten Ereignisses (8) angezeigt wird; und/oder
iii) eine Getränkeauswahl angezeigt wird;
iv) Informationen über Messwerte S2 (4) des mindestens einen Sensor einer 2. Kategorie (2) angezeigt werden, bevorzugt Informationen ausgewählt aus der Gruppe bestehend aus Höhe eines Getränkebehälters, Füllstand eines Getränkebehälters, Füllstand eines Bohnenbehälters des Getränkebereiters, Leermahlen einer Mühle des Getränkebereiters und Kombinationen hiervon; und/oder
v) Zielwerte für S2 angezeigt werden und auf Wunsch eines Benutzers bestätigt und/oder gelöscht werden.

10. Verfahren nach Anspruch 8 oder 9, **dadurch gekennzeichnet, dass** das in den Zielwerten für die Messwerte S2 kodierte mindestens eine Ereignis (8) ausgelöst wird, wenn sich die Messwerte S2 (4) mit einer Wahrscheinlichkeit von jeweils >50%, bevorzugt ≥60%, besonders bevorzugt ≥70%, ganz besonders bevorzugt ≥80%, insbesondere ≥90%, Zielwerten für die Messwerte S2 (4) zuordnen lassen.

11. Verfahren nach einem der Ansprüche 8 bis 10, **dadurch gekennzeichnet, dass** mindestens ein Messwert S1 (3) erfasst und verwendet wird, wenn sich die Messwerte S2 (4) mit einer Wahrscheinlichkeit von jeweils nur ≤50%, bevorzugt ≤40%, besonders bevorzugt ≤30%, ganz besonders bevorzugt ≤20%, insbesondere ≤10%, Zielwerten für die Messwerte S2 zuordnen lassen.

12. Verfahren nach einem der Ansprüche 8 bis 11, **dadurch gekennzeichnet, dass** der mindestens einen Sensor der 1. Kategorie (1) zu einem bestimmten Zeitpunkt einen eindimensionalen Messwert S1 (3) liefert.

13. Verfahren nach einem der Ansprüche 8 bis 12, **dadurch gekennzeichnet, dass** der mindestens einen Sensor der 2. Kategorie (2) zu einem bestimmten Zeitpunkt mehrdimensionale Messwerte S2 (4) liefert, bevorzugt mindestens dreidimensionale Messwerte S2 (4), insbesondere mindestens vierdimensionale Messwerte S2 (4).

14. Verfahren nach einem der Ansprüche 8 bis 13, **dadurch gekennzeichnet, dass** das mindestens eine bestimmte Ereignis (8) ausgewählt ist aus der Gruppe bestehend aus Interaktion des Getränkebereiters mit einem Benutzer, Instandhaltung des Getränkebereiters, Steuerung mindestens einer Komponente des Getränkebereiters und Kombinationen hiervon.

## Claims

1. A beverage maker, comprising
a) at least one sensor of a 1st category (1), wherein a sensor of the 1st category (1) is understood to mean a sensor that provides only a single measured value S1 (3) at a certain point in time;
b) at least one sensor of a 2nd category (2), wherein a sensor of the 2nd category (2) is understood to mean a sensor that provides several measured values S2 (4) at a certain point in time;
c) a data storage (5);
d) a control unit (6), wherein the control unit (6) is configured to compare the measured values S2 (4) with target values for the measured values S2, which are stored on the data storage (5) and encode for at least one specific event (8), and, on the basis of this comparison, to automatically trigger or not trigger at least one event (8) in the beverage maker;
wherein the control unit (6) of the beverage maker is further configured to detect and use at least one measured value S1 (3) to assign certain measured values S2 (4), which do not trigger an event (8) after being compared with target values for the measured values S2, to at least one event (8), and to store these measured values S2 (4) on the data storage (5) as target values for the at least one event (8),
**characterised in that** the beverage maker is further configured to assign measured values S2 (4) of the at least one sensor of the 2nd category (2), on the basis of a user's confirmation via the at least one sensor of the 1st category (1), to certain regularly occurring events (8), wherein the assignment is performed according to machine learning principles, and
wherein the measured values S2 (4) for the events (8) are automatically stored on the data storage (5).

2. A beverage maker according to the preceding claim, **characterised in that** the beverage maker includes an operator interface, preferably a touch screen, the operator interface preferably being configured to
i) display a triggered event (8); and/or
ii) to display a countdown until the implementation of a triggered event (8); and/or
iii) to display a selection of beverages;
iv) to display information on measured values S2 (4) of at least one sensor of a 2nd category (2), preferably information selected from the group consisting of a height of a beverage container, a fill level of a beverage container, a fill level of a beverage maker's bean container, an empty running of a beverage maker's grinder and combinations thereof; and/or
v) to display target values for S2 and, at a user's request, confirm and/or delete them.

3. Beverage maker according to any one of the preceding claims, **characterised in that** the control unit (6) is configured to trigger the at least one event (8) encoded in the target values for the measured values S2 if the measured values S2 (4) can be assigned to target values for the measured values S2 (4) with a probability of respectively >50%, preferably ≥60%, particularly preferably ≥70%, very particularly preferably ≥80%, especially ≥90%.

4. Beverage maker according to any one of the preceding claims, **characterised in that** the control unit (6) is configured to use at least one measured value S1 (3) if the measured values S2 (4) can be assigned to target values for the measured values S2 with a probability of respectively only ≤50%, preferably ≤40%, particularly preferably ≤30%, very particularly preferably ≤20%, in particular ≤10%.

5. Beverage maker according to any one of the preceding claims, **characterised in that** the at least one sensor of the 1st category (1) is configured to provide only a one-dimensional measured value S1 (3) at a certain point in time.

6. Beverage maker according to any one of the preceding claims, **characterised in that** the at least one sensor of the 2nd category (2) is configured to provide multi-dimensional measured values S2 (4) at a certain point in time, preferably at least three-dimensional measured values S2 (4), particularly preferably at least four-dimensional measured values S2 (4).

7. Beverage maker according to any of the preceding claims, **characterised in that** the at least one certain event (8) is selected from the group consisting of an interaction between the beverage maker and a user, a beverage maker maintenance, a control of at least one of the beverage maker's components and combinations thereof.

8. A method of operating a beverage maker, said method comprising the steps
a) detecting several measured values S2 from at least one sensor of a 2nd category (2), wherein a sensor of the 2nd category (2) is understood to mean a sensor that provides several measured values S2 (4) at a certain point in time;
b) comparing the measured values S2 (4) with target values for the measured values S2, which are stored on a data storage (5) of the beverage maker and encode for at least one specific event (8), by a control unit (6) of the beverage maker;
c) automatically triggering or not triggering at least one event (8) in the beverage maker on the basis of said comparison; and
d) detecting at least one measured value S1 (3) from at least one sensor of a 1st category (1) if no event (8) is triggered, wherein a sensor of the 1st category (1) is understood to mean a sensor that provides only a single measured value S1 (3) at a certain point in time;
wherein, in a case in which no event (8) is triggered after the comparison with target values for the measured values S2, at least one measured value S1 (3) from at least one sensor of a 1st category (1) of the beverage maker is used by the control unit (6) to assign at least one event (8) to the measured values S2 which do not trigger an event (8) after a comparison with target values for the measured values S2, and these measured values S2 (4) are stored on the data storage (5) as target values for the at least one event (8),
**characterised in that**, via the beverage maker, measured values S2 (4) of the at least one sensor of the 2nd category (2), on the basis of a user's confirmation via the at least one sensor of the 1st category (1), are assigned to certain regularly occurring events (8), whereby the assignment is based on the machine learning principles, and
wherein the measured values S2 (4) for the events (8) are automatically stored on the data storage (5).

9. A method according to claim 8, **characterised in that** the beverage maker includes an operator interface, preferably a touch screen, via which the operator interface preferably
i) displays a triggered event (8); and/or
ii) displays a countdown until an implementation of a triggered event (8); and/or
iii) displays a selection of beverages;
iv) displays information on measured values S2 (4) of at least one sensor of a 2nd category (2), preferably information selected from the group consisting of a height of a beverage container, a fill level of a beverage container, a fill level of a beverage maker's bean container, an emtpy running of a beverage maker's grinder and combinations thereof; and/or
v) displays target values for S2 and, at the user's request, confirm and/or delete them.

10. A method according to claim 8 or 9, **characterised in that** the at least one event (8) encoded in the target values for the measured values S2 is triggered if the measured values S2 (4) can be assigned to target values for the measured values S2 (4) with a probability of respectively >50%, preferably ≥60%, particularly preferably ≥70%, very particularly preferably ≥80%, in particular ≥90%.

11. A method according to one of the claims 8 to 10, **characterised in that** at least one measured value S1 (3) is detected and used if the measured values S2 (4) can be assigned to target values for the measured values S2 with a probability of respectively only ≤50%, preferably ≤40%, particularly preferably ≤30%, very particularly preferably ≤20%, in particular ≤10%.

12. A method according to any one of claims 8 to 11, **characterised in that** the at least one sensor of the 1st category (1) provides a one-dimensional measured value S1 (3) at a certain point in time.

13. A method according to any one of claims 8 to 12, **characterised in that** the at least one sensor of the 2nd category (2) provides multi-dimensional measurement values S2 (4) at a certain point in time, preferably at least three-dimensional measurement values S2 (4), in particular at least four-dimensional measurement values S2 (4).

14. A method according to any one of claims 8 to 13, **characterised in that** the at least one certain event (8) is selected from the group consisting of an interaction between the beverage maker and a user, a maintenance of the beverage maker, a control of at least one component of the beverage maker, and combinations thereof.

## Revendications

1. Préparateur de boissons, contenant
a) au moins un capteur d'une 1^{ère} catégorie (1), un capteur de la 1^{ère} catégorie (1) étant un capteur qui ne fournit qu'une seule valeur de mesure S1 (3) à un moment donné ;
b) au moins un capteur d'une 2^{ème} catégorie (2), un capteur de la 2^{ème} catégorie (2) étant un capteur qui fournit plusieurs valeurs de mesure S2 (4) à un moment donné ;
c) une mémoire de données (5) ;
d) une unité de commande (6), dans lequel l'unité de commande (6) est configurée pour comparer les valeurs de mesure S2 (4) à des valeurs cibles destinées à des valeurs de mesure S2, lesdites valeurs cibles étant stockées dans la mémoire de données (5) et codant pour au moins un événement (8) spécifique, et pour déclencher de manière automatique ou non chez le préparateur de boissons au moins un événement (8) en se basant sur ladite comparaison ;
dans lequel l'unité de commande (6) du préparateur de boissons est en outre configurée pour enregistrer et utiliser au moins une valeur de mesure S1 (3) afin d'associer à au moins un événement (8) certaines valeurs de mesure S2 (4) qui ne déclenchent aucun événement (8) après comparaison avec des valeurs cibles destinées aux valeurs de mesure S2, et afin de stocker lesdites valeurs de mesure S2 (4) dans la mémoire de données (5) en tant que valeurs cibles pour le au moins un événement (8),
**caractérisé en ce que** le préparateur de boissons est en outre configuré pour associer des valeurs de mesure S2 (4) d'au moins un capteur de la 2^{ème} catégorie (2), en se basant sur une confirmation d'au moins un capteur de la 1^{ère} catégorie (1) par un utilisateur, à des événements (8) spécifiques survenant régulièrement, dans lequel l'association intervient selon le principe de l'apprentissage automatique, et
dans lequel le stockage, dans la mémoire de données (5), des valeurs de mesure S2 (4) menant aux événements (8) intervient de manière automatique.

2. Préparateur de boissons selon la revendication précédente, **caractérisé en ce que** le préparateur de boissons contient une interface utilisateur, de manière préférée un écran tactile, dans lequel l'interface utilisateur est de manière préférée configurée pour
i) afficher un événement (8) déclenché ; et/ou
ii) afficher un décompte jusqu'à la survenue d'un événement (8) déclenché ; et/ou
iii) afficher une sélection de boissons ;
iv) afficher des informations sur des valeurs de mesure S2 (4) d'au moins un capteur de la 2^{ème} catégorie (2), de manière préférée des informations choisies dans le groupe comprenant la hauteur d'un réservoir de boisson, le niveau de remplissage d'un réservoir de boisson, le niveau de remplissage d'un réservoir de grains du préparateur de boissons, le vidage avant mouture d'un moulin du préparateur de boissons et des combinaisons de ceux-ci ; et/ou
v) afficher des valeurs cibles pour S2 et les confirmer et/ou les supprimer à la demande d'un utilisateur.

3. Préparateur de boissons selon l'une quelconque des revendications précédentes, **caractérisé en ce que** l'unité de commande (6) est configurée pour déclencher au moins un événement (8) codé dans les valeurs cibles destinées aux valeurs de mesure S2, lorsque les valeurs de mesure S2 (4) peuvent être associées à des valeurs cibles destinées aux valeurs de mesure S2 (4) avec une probabilité respectivement >50 %, de manière préférée ≥60 %, de manière particulièrement préférée ≥70 %, de manière tout particulièrement préférée ≥80 %, en particulier ≥90 %.

4. Préparateur de boissons selon l'une quelconque des revendications précédentes, **caractérisé en ce que** l'unité de commande (6) est configurée pour utiliser au moins une valeur de mesure S1 (3) lorsque les valeurs de mesure S2 (4) peuvent être associées à des valeurs cibles destinées aux valeurs de mesure S2 avec une probabilité respectivement seulement ≤50 %, de manière préférée ≤40 %, de manière particulièrement préférée ≤30 %, de manière tout particulièrement préférée ≤20 %, en particulier ≤10 %.

5. Préparateur de boissons selon l'une quelconque des revendications précédentes, **caractérisé en ce qu'**au moins un capteur de la 1^{ère} catégorie (1) est configuré pour fournir une valeur de mesure S1 (3) seulement unidimensionnelle à un moment donné.

6. Préparateur de boissons selon l'une quelconque des revendications précédentes, **caractérisé en ce qu'**au moins un capteur de la 2^{ème} catégorie (2) est configuré pour fournir des valeurs de mesure S2 (4) pluridimensionnelles à un moment donné, de manière préférée des valeurs de mesure S2 (4) au moins tridimensionnelles, de manière particulièrement préférée des valeurs de mesure S2 (4) au moins quadridimensionnelles.

7. Préparateur de boissons selon l'une quelconque des revendications précédentes, **caractérisé en ce qu'**au moins un événement (8) spécifique est choisi dans le groupe comprenant l'interaction du préparateur de boissons avec un utilisateur, la maintenance du préparateur de boissons, la commande d'au moins un composant du préparateur de boissons et des combinaisons de ceux-ci.

8. Procédé de fonctionnement d'un préparateur de boissons, comprenant les étapes consistant à :
a) détecter plusieurs valeurs de mesure S2 grâce à au moins un capteur de la 2^{ème} catégorie (2), un capteur de la 2^{ème} catégorie (2) étant un capteur qui fournit plusieurs valeurs de mesure S2 (4) à un moment donné ;
b) comparer les valeurs de mesure S2 (4) à des valeurs cibles destinées aux valeurs de mesure S2, stockées dans une mémoire de données (5) du préparateur de boissons et codant pour au moins un événement (8) spécifique, grâce à une unité de commande (6) du préparateur de boissons ;
c) déclencher ou ne pas déclencher, de manière automatique, au moins un événement (8) chez le préparateur de boissons en se basant sur ladite comparaison ; et
d) enregistrer au moins une valeur de mesure S1 (3) d'au moins un capteur de la 1^{ère} catégorie (1) si aucun événement (8) n'est déclenché, un capteur de la 1^{ère} catégorie (1) étant un capteur qui ne fournit qu'une seule valeur de mesure S1 (3) à un moment donné ;
dans lequel, dans le cas où aucun événement (8) n'est déclenché après la comparaison avec des valeurs cibles destinées aux valeurs de mesure S2, au moins une valeur de mesure S1 (3) d'au moins un capteur de la 1^{ère} catégorie (1) du préparateur de boissons est utilisée par l'unité de commande (6) pour associer au moins un événement (8) aux valeurs de mesure S2 (4) qui ne déclenchent aucun événement (8) après une comparaison avec des valeurs cibles destinées aux valeurs de mesure S2, et lesdites valeurs de mesure S2 (4) sont stockées dans la mémoire de données (5) en tant que valeurs cibles pour au moins un événement (8),
**caractérisé en ce que**, par l'intermédiaire du préparateur de boissons, des valeurs de mesure S2 (4) d'au moins un capteur de la 2^{ème} catégorie (2) sont associées, en se basant sur une confirmation d'au moins un capteur de la 1^{ère} catégorie (1) par un utilisateur, à des événements (8) spécifiques survenant régulièrement, dans lequel l'association intervient selon le principe de l'apprentissage automatique, et
dans lequel le stockage, dans la mémoire de données (5), des valeurs de mesure S2 (4) menant aux événements (8) intervient de manière automatique.

9. Procédé selon la revendication 8, **caractérisé en ce que** le préparateur de boissons contient une interface utilisateur, de manière préférée un écran tactile, dans lequel l'interface utilisateur, de manière préférée
i) affiche un événement (8) déclenché ; et/ou
ii) affiche un décompte jusqu'à la survenue d'un événement (8) déclenché ; et/ou
iii) affiche une sélection de boissons ;
iv) affiche des informations sur des valeurs de mesure S2 (4) d'au moins un capteur de la 2^{ème} catégorie (2), de manière préférée des informations choisies dans le groupe comprenant la hauteur d'un réservoir de boisson, le niveau de remplissage d'un réservoir de boisson, le niveau de remplissage d'un réservoir de grains du préparateur de boissons, le vidage avant mouture d'un moulin du préparateur de boissons et des combinaisons de ceux-ci ; et/ou
v) affiche des valeurs cibles pour S2 et les confirme et/ou les supprime à la demande d'un utilisateur.

10. Procédé selon la revendication 8 ou 9, **caractérisé en ce qu'**au moins un événement (8) codé dans les valeurs cibles destinées aux valeurs de mesure S2 est déclenché lorsque les valeurs de mesure S2 (4) peuvent être associées à des valeurs cibles destinées aux valeurs de mesure S2 (4) avec une probabilité respectivement >50 %, de manière préférée ≥60 %, de manière particulièrement préférée ≥70 %, de manière tout particulièrement préférée ≥80 %, en particulier ≥90 %.

11. Procédé selon l'une quelconque des revendications 8 à 10, **caractérisé en ce qu'**au moins une valeur de mesure S1 (3) est enregistrée et utilisée lorsque les valeurs de mesure S2 (4) peuvent être associées à des valeurs cibles destinées aux valeurs de mesure S2 avec une probabilité respectivement seulement ≤50 %, de manière préférée ≤40 %, de manière particulièrement préférée ≤30 %, de manière tout particulièrement préférée ≤20 %, en particulier ≤10 %.

12. Procédé selon l'une quelconque des revendications 8 à 11, **caractérisé en ce qu'**au moins un capteur de la 1^{ère} catégorie (1) fournit une valeur de mesure S1 (3) unidimensionnelle à un moment donné.

13. Procédé selon l'une quelconque des revendications 8 à 12, **caractérisé en ce qu'**au moins un capteur de la 2^{ème} catégorie (2) fournit des valeurs de mesure S2 (4) pluridimensionnelles à un moment donné, de manière préférée des valeurs de mesure S2 (4) au moins tridimensionnelles, en particulier des valeurs de mesure S2 (4) au moins quadridimensionnelles.

14. Procédé selon l'une quelconque des revendications 8 à 13, **caractérisé en ce qu'**au moins un événement (8) spécifique est choisi dans le groupe comprenant l'interaction du préparateur de boissons avec un utilisateur, la maintenance du préparateur de boissons, la commande d'au moins un composant du préparateur de boissons et des combinaisons de ceux-ci.
